# EUROPÄISCHE PATENTANMELDUNG

(11) **EP 4 825 525 A1**
(43) Veröffentlichungstag der Anmeldung: **21.10.2026**
(21) Anmeldenummer: 25171267.5
(22) Anmeldetag: 17.04.2025
(51) Int. Cl.: B23Q 1/70, B23Q 5/10, B23Q 1/00, B23Q 17/00

(54) **MOTORSPINDEL MIT INTEGRIERTER SENSOREINHEIT**

(71) Anmelder: IBAG Switzerland AG, 8302 Kloten (CH)
(72) Erfinder: Weindorf, Martin John, 8499 Sternenberg (CH)
(74) Vertreter: Kieffer, Valentin

(57) **Zusammenfassung**

Die Erfindung betrifft eine Motorspindel umfassend ein Gehäuse (6), in welchem ein Elektromotor, eine durch den Elektromotor antreibbare Spindelwelle und eine Sensoreinheit untergebracht sind. Die Sensoreinheit umfasst mindestens zwei Sensoren und ein Datenbearbeitungsgerät (1), mit welchem die Sensoren verbunden sind. Das Datenbearbeitungsgerät (1) ist zum Empfang von Signalen aus jedem Sensor, zur Auswertung der Signale zur Gewinnung von Sensordaten, zur Aufbereitung der Sensordaten und zum Senden der Sensordaten an ein externes elektronisches Gerät durch ein einziges Aderpaar eines Kabels geeignet. Das Datenbearbeitungsgerät (1) ist im Gehäuse (6) der Motorspindel untergebracht und umfasst nur ein einziges drei-, vier- oder fünfadriges Kabel oder nur einen einzigen drei-, vier- oder fünfpoligen Stecker (2), das bzw. der zur Übertragung der Daten aus den Sensoren an ein externes elektronisches Gerät geeignet ist.

## Beschreibung

Die vorliegende Erfindung betrifft eine Motorspindel für eine Werkzeugmaschine mit integrierter Sensoreinheit gemäss Oberbegriff des Patentanspruchs 1.

Die Komplexität von Werkzeugmaschinen nimmt stetig zu, während Ausfallzeiten, insbesondere durch Spindelausfälle, so kurz wie möglich gehalten werden müssen. Fräs- und Schleifspindeln enthalten eine Vielzahl technischer Komponenten wie Lager, Spannsysteme, Motoren usw., die alle auf engstem Raum und oft an der Grenze des technisch Machbaren arbeiten. Es ist im Stand der Technik bekannt, Motorspindeln mit diversen Sensoren zu versehen, um den sicheren Betrieb der Motorspindeln zu überwachen, Probleme frühzeitig zu erkennen und im Störungsfall den Fehler sofort zu lokalisieren. Diese Sensoren werden typischerweise durch Kabel mit einem Feldbus-Sklave-Gerät verbunden, beispielsweise mit einem «IO Link» Master Modul gemäss der Norm IEC 61131-9, welches sich ausserhalb der Motorspindel befindet und durch einen Feldbus mit einem Automatisierungsgerät verbunden ist. Je mehr Sensoren in einer Motorspindel eingebaut werden, desto höher ist die Anzahl Kabel, die aus der Motorspindel zum Feldbus-Sklave-Gerät zu führen sind. Nachteilig daran ist, neben dem Verkabelungsaufwand, dass die Kabel viel Platz nehmen und Schwachstellen der Werkzeugmaschine darstellen. Die Datenübertragung durch die Kabel kann durch Wackelkontakte bei den Steckern und Beschädigungen oder Störeinflüsse am Kabel beeinträchtigt werden, insbesondere bei Motorspindeln, die auf bewegliche Arme angeordnet sind.

Die vorliegende Erfindung stellt sich nunmehr die Aufgabe, eine Motorspindel bereitzustellen, bei welcher die durch die Verkabelung der Sensoren verursachten Nachteile gemindert werden.

Diese Aufgabe wird durch eine Motorspindel mit integrierter Sensoreinheit gemäss Patentanspruch 1 gelöst. Weitere Merkmale und Ausführungsbeispiele gehen aus den abhängigen Ansprüchen hervor und deren Vorteile sind in der nachfolgenden Beschreibung erläutert.

Die Figuren zeigen:
- Figur 1: Erfindungsgemässe Spindel

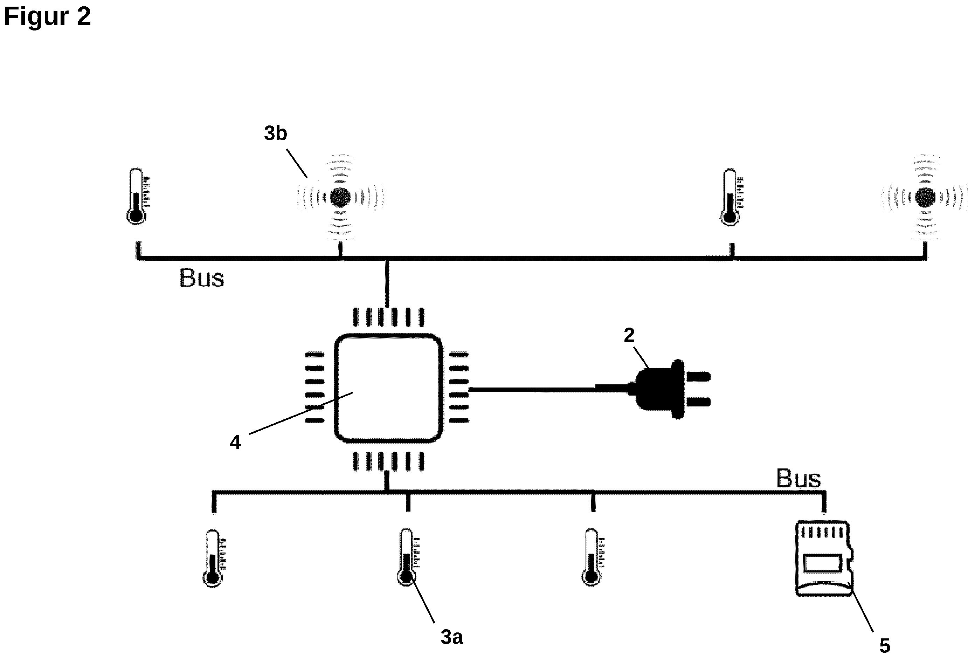

- Figur 2: Schematische Darstellung des Datenbearbeitungsgerät 1

Die Figuren stellen nur mögliche Ausführungsbeispiele der Erfindung dar.

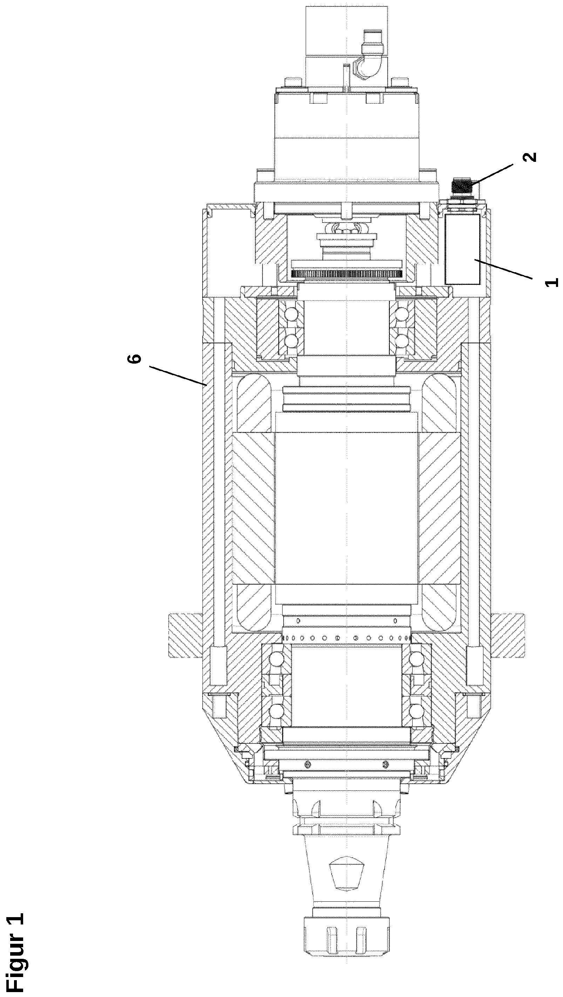

Die erfindungsgemässe Motorspindel umfasst ein Gehäuse 6, in welchem ein Elektromotor, eine durch den Elektromotor antreibbare Spindelwelle und eine Sensoreinheit untergebracht sind. Die Sensoreinheit umfasst mindestens zwei Sensoren 3a-b und ein Datenbearbeitungsgerät 1, mit welchem die Sensoren 3a-b, vorzugsweise alle Sensoren 3a-b der Motorspindel, verbunden sind. Das Datenbearbeitungsgerät 1 ist zum Empfang von analogen und/oder digitalen Signalen aus jedem Sensor 3a-b, zur Auswertung der Signale zur Gewinnung von Sensordaten, zur Aufbereitung der Sensordaten und zum Senden der Sensordaten an ein externes elektronisches Gerät durch ein einziges Aderpaar eines Kabels geeignet. Das Datenbearbeitungsgerät 1 ist im Gehäuse 6 der Motorspindel untergebracht und umfasst nur ein einziges drei-, vier- oder fünfadriges Kabel oder nur einen einzigen drei-, vier- oder fünfpoligen Stecker 2, das bzw. der zur Übertragung der Daten aus den Sensoren 3a-b an ein externes elektronisches Gerät dient (s. Figur 1). Aus dem Gehäuse 6 der erfindungsgemässen Motorspindel kommt daher nur ein einziges elektrisches Kabel oder ein einziger elektrischer Stecker 2 heraus, und die eingangs genannten Nachteile der mehreren Kabel werden gemildert. Das Datenbearbeitungsgerät 1 sendet die Sensordaten vorzugsweise in digitaler Form und die Datenübertragung wird dadurch zuverlässiger und weniger Anfällig für äussere Störeinflüsse. Dabei dient eine Ader bzw. ein Pol der Datenübertragung, eine Ader bzw. ein Pol dient als Referenz und mindestens eine Ader bzw. mindestens ein Pol dient der Stromversorgung der Sensoreinheit. Besonders vorteilhaft ist es, wenn das Datenbearbeitungsgerät 1 zur bidirektionalen Kommunikation mit einem externen elektronischen Gerät durch das einzige Aderpaar geeignet ist (Empfang von Daten oder Instruktionen und Senden von Daten aus den Sensoren 3a-b). Das Datenbearbeitungsgerät 1 ist beispielsweise zur bidirektionalen Kommunikation mit einem externen elektronischen Gerät gemäss dem «IO Link» Protokoll gemäss der Norm IEC 61131-9 programmiert. Vorzugsweise dient das Kabel bzw. der Stecker 2 auch zur Stromversorgung der Motorspindel.

Die Sensoren 3a-b sind beispielsweise Beschleunigungssensoren, insbesondere 3-Achsen Beschleunigungssensoren, Temperatursensoren 3a, insbesondere zur Überwachung der Temperatur der Lager der Spindelwelle, Vibrationssensoren 3b, Drehzahlsensoren, Laufzeituhren, Sensoren zur Messung der Position der Spindelwelle usw.. Es können Sensoren 3a-b mit analogem oder digitalem Ausgangssignal verwendet werden. Analoge Ausgangssignale der Sensoren werden durch das Datenbearbeitungsgerät 1 digitalisiert. Digitale Ausgangssignale der Sensoren können durch das Datenbearbeitungsgerät 1 umformatiert und/oder komprimiert und/oder anderweitig bearbeitet werden, um deren Speicherung und/oder Übertragung zu vereinfachen.

Das Datenbearbeitungsgerät 1 umfasst vorzugsweise einen Mikrocontroller 4, der zum Empfang von Signalen aus jedem Sensor 3a-b, zur Auswertung der Signale zur Gewinnung von Sensordaten und zur Aufbereitung der Sensordaten geeignet ist, sowie einen Transceiver, der zur Umwandlung der Signale aus dem Mikrocontroller 4 vor deren Versand geeignet ist, vorzugsweise in Signale gemäss dem «IO Link» Protokoll gemäss der Norm IEC 61131-9.

Das Datenbearbeitungsgerät 1 umfasst vorzugsweise ein Speichermedium 5, beispielsweise eine SD-Karte 5, und der Mikrocontroller 4 ist in diesem Fall zur Datenspeicherung auf dem Speichermedium 5 und zum Abruf von Daten aus dem Speichermedium 5 geeignet.

Jeder Sensor 3a-b der Sensoreinheit kann mit dem Datenbearbeitungsgerät 1 durch eine eigene Verbindung separat verbunden sein oder durch ein oder mehrere Busse, beispielsweise durch I²C und/oder SPI Busse.

Bestehende Motorspindeln, aus welchen eine Vielzahl von Sensorkabeln oder Sensorsteckern herauskommen, können mit dem beschriebenen Datenbearbeitungsgerät 1 nachgerüstet werden, um eine erfindungsgemässe Motorspindel bereitzustellen. Dabei werden alle Sensorkabel oder Sensorstecker der Motorspindel entfernt, das Datenbearbeitungsgerät 1 wird in den durch das Entfernen der Sensorkabel oder Sensorstecker frei gewordene Raum innerhalb des Gehäuses 6 der Motorspindel untergebracht und die bestehenden Sensoren 3a-b der Motorspindel werden mit dem Datenbearbeitungsgerät 1 verbunden.

Bei einer Werkzeugmaschine, die mit mindestens einer erfindungsgemässen Motorspindel versehen ist, ist das Datenbearbeitungsgerät über ein einziges drei-, vier- oder fünfadriges Kabel mit einem Feldbus-Sklave-Gerät verbunden, und das Feldbus-Sklave-Gerät ist durch einen Feldbus mit einem Automatisierungsgerät verbunden. Auf dieser Weise gibt es zwischen dem Gehäuse 6 der Spindel und dem Feldbus-Sklave-Gerät nur ein einziges elektrisches Kabel und die eingangs genannten Nachteile der mehreren Kabel werden gemildert.

## Patentansprüche

1. Motorspindel umfassend ein Gehäuse (6), in welchem ein Elektromotor, eine durch den Elektromotor antreibbare Spindelwelle und eine Sensoreinheit untergebracht sind, wobei die Sensoreinheit mindestens zwei Sensoren (3a-b) und ein Datenbearbeitungsgerät (1) umfasst, mit welchem die Sensoren (3a-b) verbunden sind, wobei das Datenbearbeitungsgerät (1) zum Empfang von Signalen aus jedem Sensor (3a-b), zur Auswertung der Signale zur Gewinnung von Sensordaten, zur Aufbereitung der Sensordaten und zum Senden der Sensordaten an ein externes elektronisches Gerät durch ein einziges Aderpaar eines Kabels geeignet ist,
wobei das Datenbearbeitungsgerät (1) im Gehäuse (6) der Motorspindel untergebracht ist und ein einziges drei-, vier- oder fünfadriges Kabel oder nur einen einzigen drei-, vier- oder fünfpoligen Stecker (2) umfasst, das bzw. der zur Übertragung der Daten aus den Sensoren (3a-b) an ein externes elektronisches Gerät geeignet ist.

2. Motorspindel gemäss Anspruch 1,
**dadurch gekennzeichnet, dass**
aus dem Gehäuse (6) der Motorspindel nur ein einziges elektrisches Kabel bzw. ein einziger elektrischer Stecker (2) herauskommt.

3. Motorspindel gemäss Anspruch 1,
**dadurch gekennzeichnet, dass**
eine Ader bzw. ein Pol der Datenübertragung, eine Ader bzw. ein Pol als Referenz und mindestens eine Ader bzw. ein Pol der Stromversorgung der Sensoreinheit dient.

4. Motorspindel gemäss Anspruch 1,
**dadurch gekennzeichnet, dass**
das Datenbearbeitungsgerät (1) zur bidirektionalen Kommunikation mit einem externen elektronischen Gerät durch das einzige Aderpaar geeignet ist.

5. Motorspindel gemäss Anspruch 1,
**dadurch gekennzeichnet, dass**
das Kabel bzw. der Stecker (2) auch zur Stromversorgung der Motorspindel dient.

6. Motorspindel gemäss Anspruch 1,
**dadurch gekennzeichnet, dass**
die Sensoren (3a-b) sind beispielsweise Beschleunigungssensoren, Temperatursensoren (3a), Vibrationssensoren (3b), Drehzahlsensoren, Laufzeituhren, Sensoren zur Messung der Position der Spindelwelle usw..

7. Motorspindel gemäss Anspruch 1,
**dadurch gekennzeichnet, dass**
das Datenbearbeitungsgerät (1) einen Mikrocontroller (4) und einen Transceiver umfasst,
wobei der Mikrocontroller (4) zum Empfang von Signalen aus jedem Sensor (3a-b), zur Auswertung der Signale zur Gewinnung von Sensordaten und zur Aufbereitung der Sensordaten geeignet ist,
wobei der Transceiver zur Umwandlung der Signale aus dem Mikrocontroller (4) vor deren Versand geeignet ist.

8. Motorspindel gemäss Anspruch 1,
**dadurch gekennzeichnet, dass**
das Datenbearbeitungsgerät (1) ein Speichermedium (5) umfasst und der Mikrocontroller (4) ist zur Datenspeicherung auf dem Speichermedium (5) und zum Abruf von Daten aus dem Speichermedium (5) geeignet.

9. Verfahren zur Bereitstellung einer Motorspindel gemäss einem oder mehreren der Ansprüche 1 bis 8 ausgehend von einer bestehenden Motorspindel mit einer Vielzahl von Sensorkabeln oder Sensorsteckern,
**gekennzeichnet durch** die folgenden Verfahrensschritte:
• Entfernung aller Sensorkabel oder Sensorstecker der bestehenden Motorspindel;
• Unterbringung des Datenbearbeitungsgeräts (1) in den durch das Entfernen der Sensorkabel oder Sensorstecker frei gewordene Raum innerhalb des Gehäuses (6) der Motorspindel;
• Verbindung der bestehenden Sensoren (3a-b) der Motorspindel mit dem Datenbearbeitungsgerät (1).

10. Werkzeugmaschine mit mindestens einer Motorspindel gemäss einem oder mehreren der Ansprüche 1 bis 8, wobei das Datenbearbeitungsgerät über ein einziges drei-, vier- oder fünfadriges Kabel mit einem Feldbus-Sklave-Gerät verbunden ist, und wobei das Feldbus-Sklave-Gerät durch einen Feldbus mit einem Automatisierungsgerät verbunden ist.
